# FASCICULE DE BREVET EUROPEEN

(11) **EP 1 078 229 B1**
(45) Date de publication et mention de la délivrance du brevet: **31.07.2002**
(21) Numéro de dépôt: 99952117.2
(22) Date de dépôt: 14.05.1999
(51) Int. Cl.: G01F 3/22

(54) **COMPTEUR DE GAZ POURVU DE MOYENS DE GUIDAGE AMELIORES**
GASZÄHLER MIT VERBESSERTEN FÜHRUNGSMITTELN
GAS METER PROVIDED WITH IMPROVED GUIDE MEANS

(30) Priorité: 20.05.1998 FR 9806508
(43) Date de publication de la demande: 28.02.2001
(73) Titulaire: SCHLUMBERGER INDUSTRIES, F-92542 Montrouge Cédex (FR)
(72) Inventeur: DUMAY, Michel, F-51140 Jonchery sur Vesle (FR); CHAMPOUGNY, Jean-Luc, Seneca, SC 29672 (US)
(74) Mandataire: Feray, Valérie
(86) Numéro de dépôt international: EP9903391
(87) Numéro de publication internationale: WO9960347

(56) Documents cités:
- EP-A- 0 128 838

## Description

L'invention est relative à un compteur de gaz comprenant plusieurs chambres de mesures à membranes déformables, un élément de distribution monté rotatif autour d'un axe dit de rotation sur une surface de distribution dans laquelle sont ménagés plusieurs orifices qui sont reliés chacun à une chambre de mesure, ledit élément de distribution permettant au gaz alternativement d'entrer et de sortir des chambres de mesure au cours du mouvement de rotation, et des moyens de guidage en rotation dudit élément de distribution.

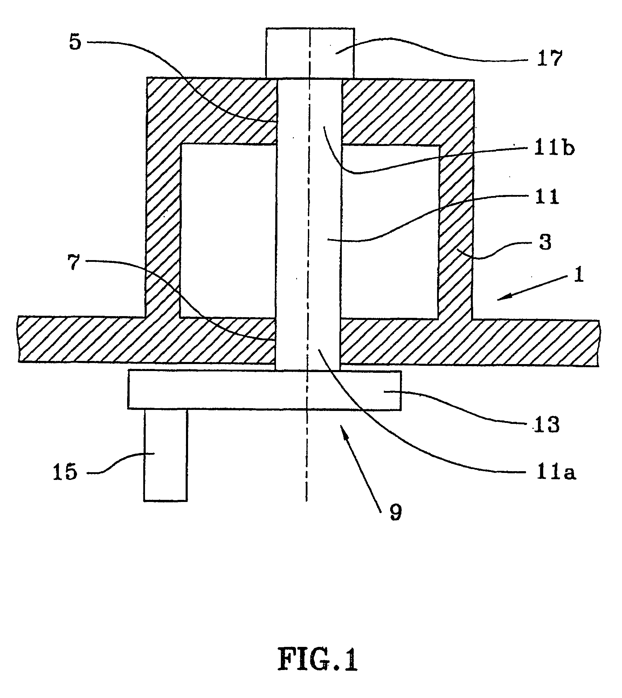

De tels compteurs de gaz comprenant des moyens de guidage en rotation de l'élément de distribution sont connus et la figure 1 en illustre un mode de réalisation.

Sur la figure 1, une structure désignée par la référence générale notée 1 comporte un cadre 3 dans lequel sont aménagés deux logements 5 et 7 formant paliers (le compteur de gaz et l'élément de distribution ne sont pas représentés).

Les moyens de guidage comprennent une pièce de guidage 9 en forme de manivelle dont une partie 11 est constituée d'un cylindre en laiton de diamètre unique sur toute sa hauteur et qui est engagé dans les deux ouvertures 5 et 7 du cadre 3. Le guidage en rotation du cylindre 11 et donc de la pièce de guidage 9 est assuré au droit des paliers 5 et 7 par des portions cylindriques du cylindre 11 éloignées l'une de l'autre.

Un maneton 13 en tôle métallique est disposé de manière perpendiculaire à l'axe du cylindre 11 et est serti sur l'extrémité 11a de ce dernier. Ce maneton comporte un doigt 15 parallèle à l'axe du cylindre 11 mais décalé par rapport à ce dernier. Le doigt 15 est destiné à coopérer avec l'élément de distribution (situé en dessous) afin de guider son mouvement de rotation.

A la partie supérieure 11b du cylindre 11, une rondelle 17 en plastique est prévue afin de retenir axialement la pièce de guidage 9 empêchant ainsi celle-ci d'exercer un effort de poussée descendant sur l'élément de distribution.

Cette pièce de guidage présente l'inconvénient d'être difficile à assembler et il serait par conséquent intéressant de trouver une solution plus simple.

La présente invention vise à remédier à ce problème en proposant un compteur de gaz comprenant plusieurs chambres de mesure à membranes déformables, un élément de distribution monté rotatif autour d'un axe dit de rotation sur une surface de distribution dans laquelle sont ménagés plusieurs orifices qui sont reliés chacun à une chambre de mesure, ledit élément de distribution permettant au gaz alternativement d'entrer et de sortir des chambres de mesure au cours du mouvement de rotation, des moyens de guidage en rotation dudit élément de distribution comprenant, d'une part, une pièce de guidage dont au moins une partie a une forme générale allongée suivant ledit axe de rotation et qui comprend deux portions cylindriques éloignées l'une de l'autre et, d'autre part, deux paliers dans lesquels lesdites portions cylindriques sont montées libres en rotation, caractérisé en ce que la pièce de guidage est réalisée dans un matériau thermoplastique et en ce que les portions cylindriques ont des diamètres différents.

Le fait d'utiliser un matériau thermoplastique permet d'obtenir toute la pièce de guidage en une seule opération de démoulage et il n'y a donc plus à assembler ladite pièce de guidage selon une méthode compliquée.

La Demanderesse a également trouvé qu'il fallait avoir deux portions cylindriques de diamètres différents pour la pièce de guidage en matériau thermoplastique pour que les problèmes de perte de charge dûs à l'usure mécanique des parties en contact ne se posent pas.

En effet, si, comme dans l'art antérieur, la pièce de guidage conservait un même diamètre sur toute sa hauteur, qui est par exemple de 15mm, alors, en raison de l'opération de démoulage et donc de la nécessité d'avoir une dépouille sur les pièces à démouler, ladite pièce de guidage et l'autre partie des moyens de guidage comportant les paliers ne pourraient techniquement pas avoir des dépouilles identiques étant donné la hauteur considérée.

De ce fait, il y aurait obligatoirement un jeu mécanique inégal sur toute la hauteur de la pièce de guidage, ce qui se traduirait par une usure mécanique prématurée et des problèmes inévitables de pertes de charge au niveau du compteur.

Avec des portions cylindriques de diamètres différents et, pour une même hauteur de la pièce de guidage, la dépouille desdites portions cylindriques est parfaitement contrôlée et la même dépouille peut être obtenue pour les paliers correspondants ce qui assure un jeu mécanique identique sur toute la hauteur de la pièce de guidage.

En outre, le matériau thermoplastique présente l'avantage d'être peu coûteux et donc l'augmentation de diamètre des portions cylindriques sur la pièce de guidage a peu de répercussion du point de vue du coût de la fabrication d'une telle pièce.

En effectuant l'opération de démoulage de la pièce de guidage dans une direction parallèle à la direction longitudinale de ladite pièce de guidage, cela garantit que les deux portions cylindriques restent parfaitement coaxiales.

Il s'ensuit une diminution des jeux dans les paliers et donc une diminution de l'usure et des pertes de charge au niveau du compteur.

Selon une caractéristique, la portion cylindrique de plus grand diamètre est la plus proche de l'élément de distribution.

A titre de variante, la pièce de guidage peut comprendre une portion tronconique reliant entre elles les deux portions cylindriques de diamètres différents.

Plus particulièrement, la pièce de guidage a la forme d'une manivelle dont une extrémité est constituée des portions cylindriques engagées dans les paliers et dont l'autre extrémité est constituée d'un doigt parallèle à l'axe de rotation, décalé par rapport à celui-ci, et qui coopère avec une cavité pratiquée dans l'élément de distribution.

Selon une caractéristique de l'invention, le compteur de gaz comprend une structure porteuse en forme de U dont l'intérieur est tourné en direction de l'élément de distribution de façon à encadrer ce dernier et supportant la pièce de guidage, la partie allongée de ladite pièce de guidage étant engagée dans un logement prévu dans la structure par une extrémité dudit logement qui est disposé du côté où se trouve l'élément de distribution, les paliers étants aménagés à l'intérieur dudit logement.

Par ailleurs, le compteur de gaz selon l'invention comprend un organe de retenue axiale de la pièce de guidage afin d'éviter que ladite pièce de guidage exerce un effort vertical descendant sur l'élément de distribution.

Par exemple, l'organe de retenue axiale de la pièce de guidage est un pion engagé dans un fourreau axial aménagé à l'intérieur de la pièce de guidage du coté de l'extrémité opposée du logement, le pion étant fixé à ladite pièce de guidage de manière amovible et étant pourvu à l'extérieur dudit fourreau d'un épaulement formant une tête qui prend appui sur la structure porteuse de manière à retenir axialement ladite pièce de guidage.

Le pion est par exemple fixé à l'intérieur du fourreau par encliquetage.

Plus précisément, le pion présente sur un de ses diamètres une gorge annulaire destinée à coopérer avec un bossage annulaire aménagé sur la surface intérieure du fourreau.

En outre, la tête du pion prend appui sur la structure porteuse au moyen d'une surface annulaire perpendiculaire à l'axe de rotation.

Le compteur de gaz selon l'invention comprend également un totalisateur à affichage et la pièce de guidage comporte une roue dentée qui transmet le mouvement de rotation de l'élément de distribution audit totalisateur par l'intermédiaire d'un train d'engrenages.

La roue dentée est par exemple disposée à une extrémité de la partie allongée de la pièce de guidage engagée dans le logement qui est la plus proche de l'élément de distribution et est disposée perpendiculairement à cette partie.

La pièce de guidage peut comprendre un plateau qui porte sur une face la roue dentée.

Le plateau porte sur sa face opposée le doigt qui coopère avec l'élément de distribution.

Plus particulièrement, la structure en forme de U est constituée d'une partie centrale parallèle à la surface de distribution et de deux parties latérales formant les branches du U, ladite partie centrale comportant une embase de forme générale circulaire disposée dans un plan P1 parallèle à la surface de distribution et pourvu à sa périphérie d'une collerette disposée perpendiculairement à ladite embase de manière à définir une cavité située en vis-à-vis de l'élément de distribution et destinée à recevoir la roue dentée.

La partie centrale de la structure en forme de U comporte de part et d'autre de l'embase deux portions situées dans un plan P2 parallèle à la surface de distribution et qui est décalé par rapport au plan P1 d'une distance supérieure à l'épaisseur de la roue dentée, l'une desdites portions portant un pivot pouvant recevoir une autre roue dentée du train d'engrenage et un évidement étant pratiqué dans ladite embase et dans ladite collerette afin que les roues dentées puissent coopérer entre elles.

L'autre portion de la partie centrale porte un pivot pouvant également recevoir une roue dentée du train d'engrenages et un évidement étant pratiqué dans l'embase et la collerette du côté opposé au premier évidement afin que cette roue dentée et celle logée dans la cavité puissent coopérer entre elles.

D'autres caractéristiques et avantages apparaîtront au cours de la description qui va suivre donnée uniquement à titre d'exemple non limitatif et faites aux références aux dessins annexées sur lesquels:
- la figure 1 représente des moyens de guidage d'un élément de distribution d'un compteur de gaz à membranes selon l'art antérieur,
- la figure 2 est une vue en perspective du compteur de gaz selon l'invention montrant les passages 30 à 38 pour l'admission et l'évacuation du gaz dans le compteur,
- la figure 3 est une vue en perspective du compteur de gaz selon l'invention montrant une membrane 28 et un couvercle 24 rapporté sur le bloc central 22,
- la figure 4 est une vue en perspective de dessus du compteur de gaz selon l'invention dans la même position que celui de la figure 2 mais sur laquelle le couvercle de distribution 42, la plaque 40 et les axes 66, 68 ont été ajoutés,
- les figures 5 et 6 représentent l'élément de distribution 64 respectivement dans une vue en perspective et en vue de dessous,
- la figure 7 est un agrandissement de la partie supérieure du compteur de gaz selon l'invention montrant l'élément de distribution 64, la structure porteuse 80 et les moyens de transmission 70, 72, 74, 76,
- la figure 8 est une vue éclatée représentant la pièce de guidage 84 et la structure porteuse 80,
- la figure 9 représente la pièce de guidage vue en coupe lorsqu'elle est montée dans la structure porteuse 80.

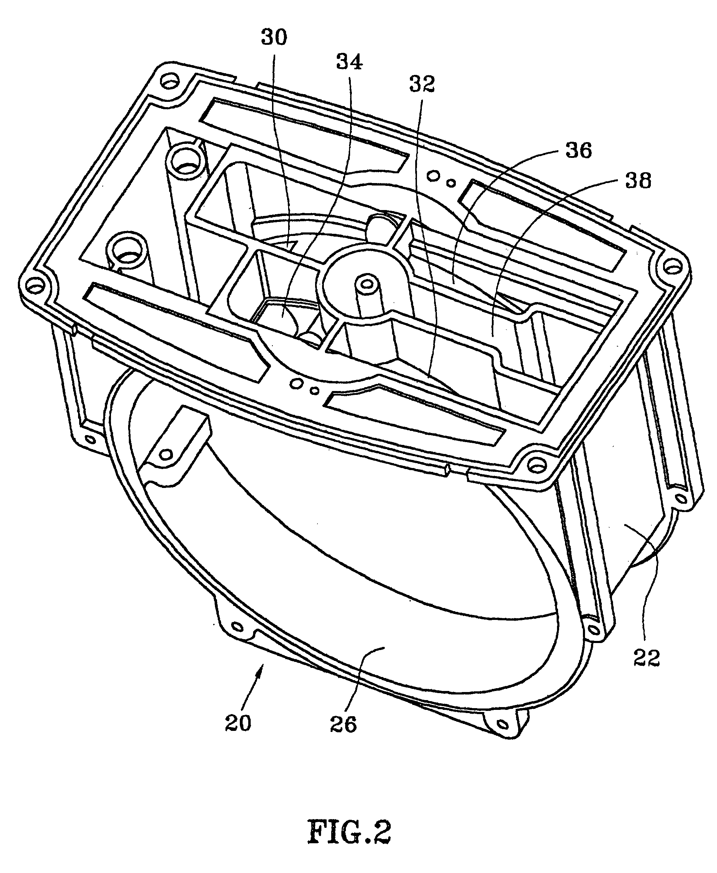

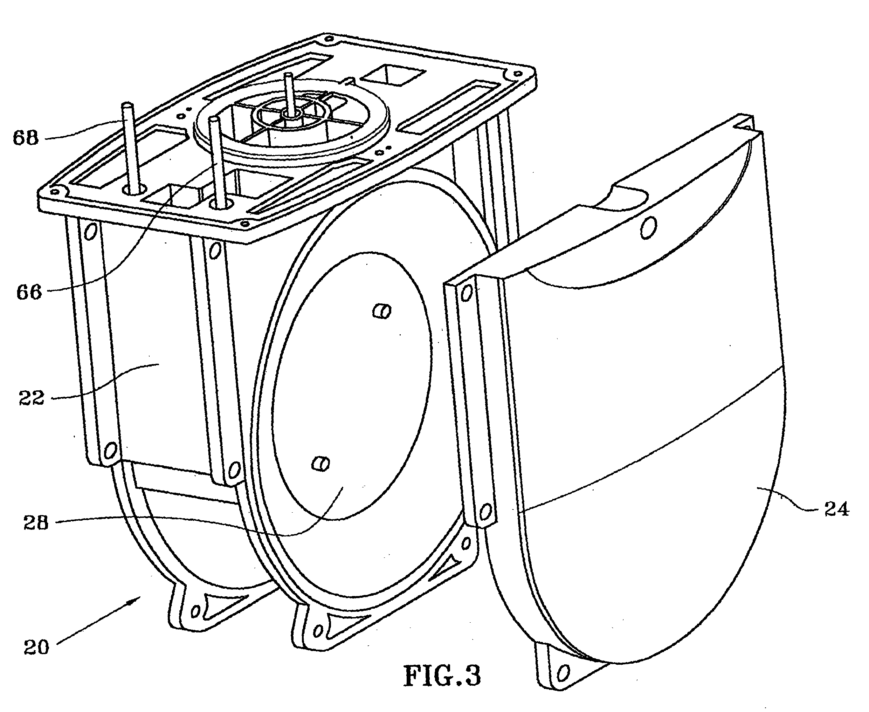

Comme représenté aux figures 2 et 3 et désigné par la référence générale notée 20, le compteur de gaz selon l'invention comprend tout d'abord un bloc central noté 22 et deux couvercles latéraux dont un seul 24 est représenté sur la figure 3.

Le bloc central 22 définit deux chambres dont une seule 26 est représentée sur la figure 2. Chaque chambre est délimitée d'une part par le bloc central 22 et d'autre part par une membrane déformable (membrane 28 sur la figure 3). Lorsque les couvercles sont rapportés sur le bloc central 22, ceux-ci définissent avec chaque membrane déformable une autre chambre de mesure. Ainsi, deux chambres de mesure sont situées de part et d'autre de chaque membrane déformable et le volume de ces chambres varie selon la position de la membrane.

Comme représenté sur la figure 2, le bloc central 22 définit dans sa structure interne quatre passages 30, 32, 34, 36 qui communiquent chacun avec une chambre de mesure. Par exemple le passage 30 communique avec la chambre de mesure 26 et le passage 34 communique avec une chambre de mesure (non représentée sur la figure 2) qui est le symétrique de la chambre de mesure 26 par rapport au bloc central 22.

Le bloc central 22 définit également un cinquième passage noté 38 qui permet l'évacuation du gaz dudit bloc central.

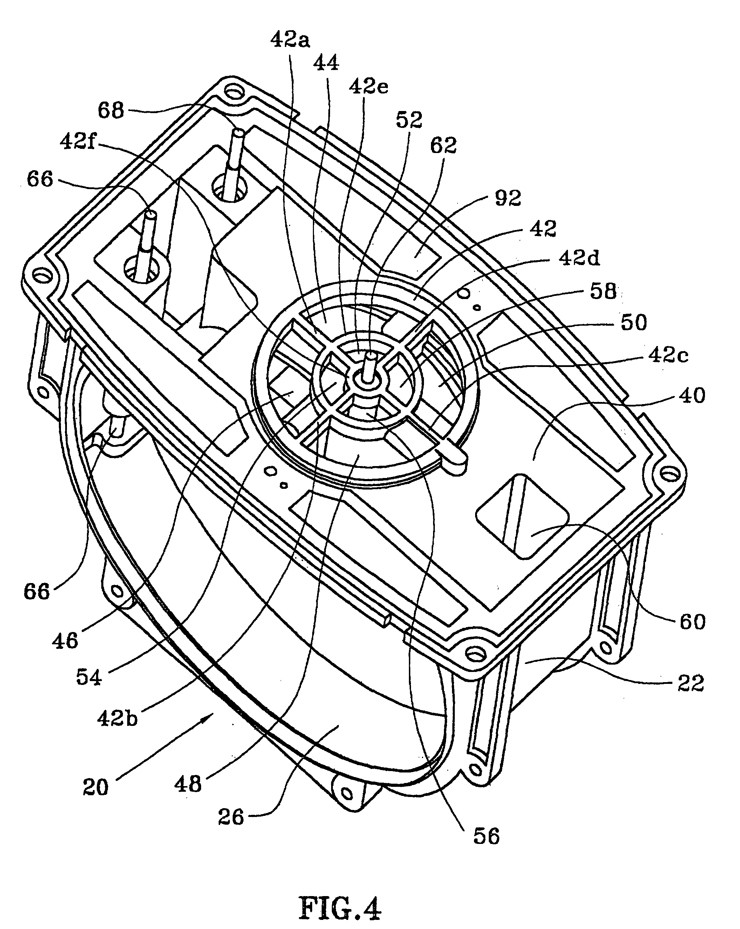

Sur les figures 3 et 4, une plaque de tôle 40 a été disposée au-dessus des passages 30 à 38 et une pièce appelée "couvercle de distribution" référencée 42 est disposée sur ladite plaque 40. Ce couvercle 42 comporte quatre ouvertures ou lumières 44, 46, 48, 50 ayant chacune la forme d'un quart de secteur de cercle et qui sont séparées par des barrettes radiales d'étanchéité 42a, 42b, 42c, 42d.

Dans la partie centrale du couvercle de distribution 42, une couronne circulaire 42e définit avec les barrettes radiales 42a-d quatre orifices 52, 54, 56, et 58. Ces orifices communiquent chacun avec le passage de sortie 38 et celui-ci se termine par une ouverture 60 pratiquée dans la plaque de fermeture 40.

Au centre du couvercle de distribution 42 un pivot 62 est monté suivant un axe perpendiculaire à la surface supérieure 42f dite surface de distribution du couvercle de distribution 42. Ce pivot est destiné à recevoir un élément de distribution appelé également distributeur.

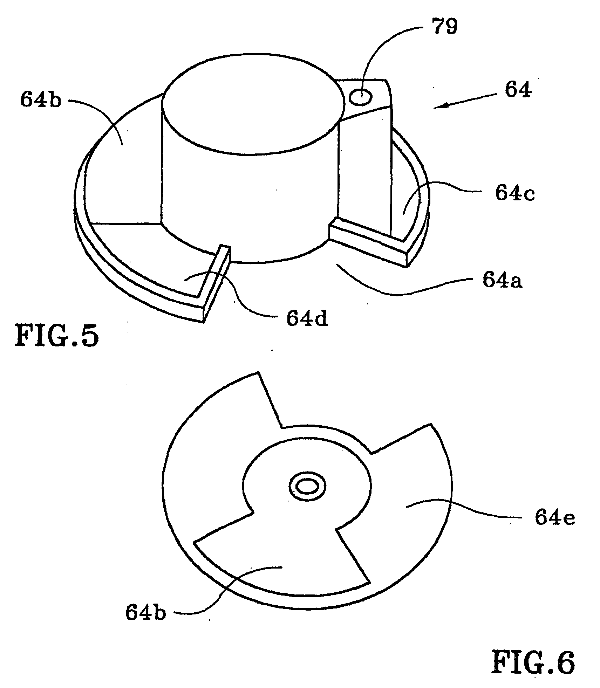

Le distributeur 64 est monté rotatif sur la surface de distribution 42f du couvercle de distribution 42 et glisse sur cette surface. Le distributeur est constitué par quatre secteurs de cercles qui sont aménagés de manière à former un orifice 64a et une zone bombée 64b (figure 5) séparés par deux zones planes 64c et 64d. Chacune de ces quatre zones couvre un angle de 90°. Le distributeur comporte également (figure 6) une zone centrale évidée 64e qui communique avec la zone bombée creuse 64b.

A la lumière des figures 5 à 7, on comprend aisément que l'orifice 64a a pour but de mettre successivement chaque lumière 44, 46, 48, 50 en communication avec l'extérieur du bloc central 22, que la zone bombée 64b et la zone centrale 64e ont pour but de mettre en communication le passage de sortie 38 avec l'une desdites lumières tout en isolant l'ensemble vis-à-vis de l'extérieur du bloc central et que les zones planes 64c, 64d obturent les lumières restantes.

Comme cela est bien connu la rotation du distributeur permet de commander l'admission et l'évacuation du gaz dans les différentes chambres de mesure. Les compteurs à quatre chambres et à distributeurs rotatifs sont bien connus en eux-mêmes, par exemple par le brevet américain n°3,161,049. Il est donc inutile décrire ici les détails de fonctionnement d'un tel compteur, c'est à dire les relations entre la position du distributeur rotatif 64 et la position des membranes dans les chambres de mesure. Il suffira de se reporter au document cité ci-dessus.

Il convient malgré tout de mentionner que le compteur de gaz comprend des moyens de transmission pour relier cinématiquement le distributeur aux membranes déformables.

Comme représenté sur les figures 3, 4 et 7, les moyens de transmission comprennent deux axes 66, 68 qui traversent le bloc 22 sur une partie de sa hauteur et qui communiquent avec les chambres du mesure du compteur. Sur la figure 4, une partie de l'axe 66 est visible dans la chambre 26. Chacun de ces axes est relié à une membrane déformable et sous l'effet du déplacement de ladite membrane effectue un mouvement de rotation correspondant.

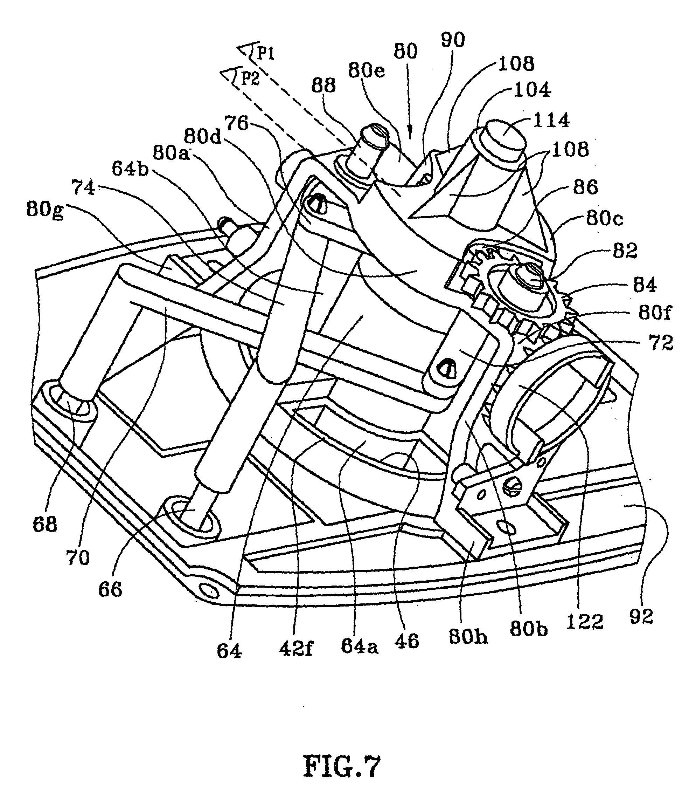

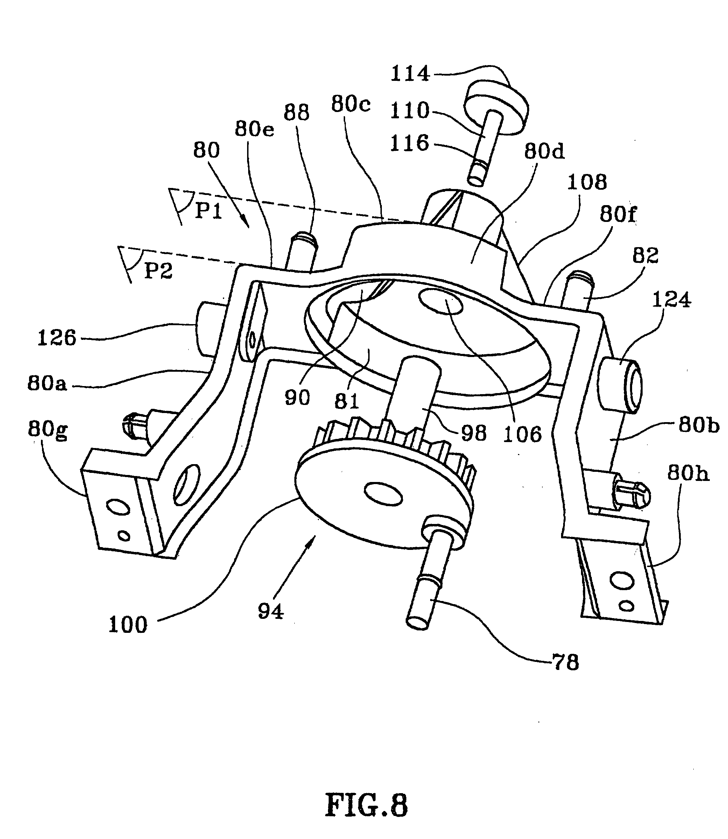

Les moyens de transmission comprennent également, ainsi que représenté sur la figure 7, deux ensembles de leviers 70, 72 et 74, 76. Ces ensembles de leviers relient chacun un axe 66, 68 à un autre axe 78 (Fig.8) qui est engagé dans une ouverture 79 (figure 5) pratiquée dans le distributeur 64. Ainsi, le mouvement des membranes déformables lors de l'admission et l'évacuation du gaz dans les chambres de mesure est communiqué par ces moyens de transmission au distributeur 64 qui effectue un mouvement de rotation correspondant.

Comme représenté sur la figure 7, une structure 80 est montée sur le bloc central 22 juste au-dessus de l'élément de distribution 64. Cette structure porteuse 80 a une forme générale en U, l'intérieur du U étant tourné en direction de l'élément de distribution 64 de façon à encadrer ce dernier.

La structure 80 en forme de U est constituée d'une partie centrale parallèle à la surface de distribution 42f et de deux parties latérales 80a, 80b formant les branches du U. La partie centrale de la structure comporte une embase 80c de forme générale circulaire disposée dans un plan P1 parallèle à la surface de distribution 42f et qui est pourvue à sa périphérie d'une collerette 80d disposée perpendiculairement à ladite embase de manière à définir une cavité 81.

La partie centrale de la structure comporte de part et d'autre de l'embase 80c deux portions planes 80e, 80f situées dans un plan P2 parallèle à la surface de distribution mais qui est décalé axialement par rapport au plan P1.

L'une des portions 80f porte un pivot 82 destiné à recevoir une roue dentée 84 ainsi que représentée sur la figure 7.

Un évidement 86 est pratiqué dans l'embase 80c et dans la collerette 80d afin que la roue dentée 84 puisse s'engager dans la cavité 81.

L'autre portion 80e de la partie centrale de la structure 80 porte un pivot 88, également destiné à recevoir une autre roue dentée (non représentée sur les figures) lorsque la roue 84 n'est pas présente, et un autre évidement 90 est pratiqué dans l'embase et la collerette du côté opposé au premier évidement, permettant ainsi à l'éventuelle autre roue dentée de pénétrer dans la cavité 81.

Les branches 80a, 80b de la structure porteuse 80 sont pourvues à leurs extrémités libres opposées à celles reliées à la partie centrale de pattes de fixation 80g, 80h qui sont destinées à coopérer avec la partie supérieure 92 du bloc central 22.

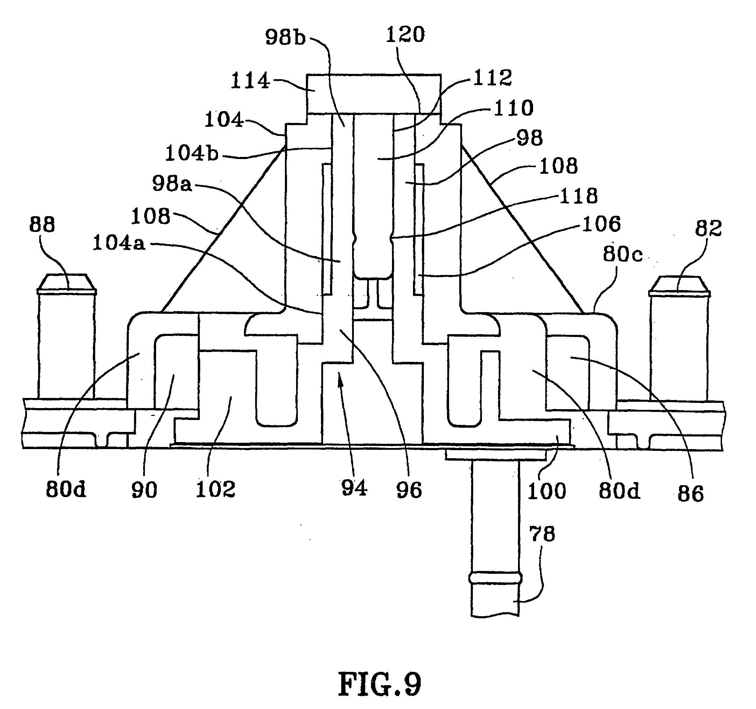

Des moyens de guidage en rotation de l'élément de distribution 64 sont prévus et sont représentés sur les figures 8 et 9.

La figure 8 représente une vue agrandie de côté de la partie centrale de la structure porteuse 80, sur laquelle les moyens de guidage ont été représentés en coupe dans un plan passant par l'axe de rotation de l'élément de distribution 64 qui est confondu avec l'axe du pivot 62. Le reste de la partie centrale a été représenté de manière non coupée.

Ces moyens de guidage comprennent une pièce 94 en forme de manivelle (figure 8). La pièce de guidage 94 comprend une partie de forme générale allongée qui est constituée de deux cylindres de diamètres différents, un premier cylindre 96 de hauteur relativement faible, par exemple de l'ordre de 6mm et un second cylindre 98 de hauteur plus grande par rapport à celle du premier cylindre par exemple de l'ordre de 14mm.

La pièce de guidage comprend également un plateau circulaire 100 et une roue dentée 102 montée sur une des faces du plateau 100.

La partie allongée de la pièce de guidage 94 constituée des deux cylindres 96, 98 est montée sur la partie centrale de la roue dentée 102 de manière à ce que l'extrémité de la partie allongée portant le cylindre de diamètre plus grand 96 soit reliée à ladite roue dentée.

Comme représenté sur la figure 9, la partie centrale de la pièce de guidage est creuse.

Le plateau 100 porte également sur sa face opposée un doigt 78 (déjà décrit précédemment) qui est parallèle à l'axe de rotation de l'élément de distribution 64 et qui s'engage dans la lumière 79 dudit élément représentée à la figure 5.

Pour des raisons de simplicité de fabrication, la pièce de guidage 94 est réalisée en une seule pièce.

La partie centrale de la structure porteuse 80 comporte une pièce cylindrique 104 (figures 7 à 9) montée sur l'embase 80c et dans laquelle est prévu un logement 106 aligné suivant l'axe de rotation de l'élément de distribution 64.

Comme représenté sur la figure 9, la pièce de guidage 94 est engagée par sa partie allongée dans le logement 106 prévu à cet effet. Ainsi, lorsque la pièce 94 est engagée dans le logement 106, la portion cylindrique 96 coopère avec un premier palier 104 et la roue dentée 102 est logée dans la cavité 81.

Le cylindre 98 possède deux portions cylindrique 98a et 98b dont la seconde 98b coopère avec un second palier 104b de la pièce 104. Ainsi, les portions cylindriques éloignées 96 et 98b, de diamètres différents assurent le guidage à l'intérieur des paliers 104a, 104b.

La pièce 94 est réalisée dans un matériau thermoplastique. Ainsi, cette pièce est simple à fabriquer par moulage/démoulage et son coût de fabrication est plus économique que celui de la pièce de l'art antérieur décrite précédemment et qui est constituée de matériaux différents.

En outre, on peut facilement assembler cette pièce de guidage avec d'autres pièces, par exemple par soudage.

A titre de variante, la pièce de guidage peut également comprendre une portion tronconique reliant entre elles les deux portions cylindriques 96 et 98b qui participent au guidage et ainsi, remplacer la portion cylindrique 98a.

Etant donné qu'au cours du guidage en rotation de l'élément de distribution 64, la pièce de guidage 94 et la pièce 104 sont soumises à des efforts mécaniques importants, des nervures 108 de renforcement de la partie centrale de la structure 80 sont prévues.

Pour que la pièce de guidage 94 n'exerce pas d'efforts axiaux descendants sur l'élément de distribution 64 un organe de retenue axiale 110 est prévu.

Comme représenté sur les figures 8 et 9, l'organe de retenue axiale de la pièce de guidage est un pion cylindrique 110 engagé dans un fourreau cylindrique 112 aménagé dans la partie centrale de la pièce de guidage 94, là où se trouvent les portions cylindriques 96 et 98a, b.

Le pion 110 est pourvu à son extrémité opposée à celle engagée dans le fourreau 112 d'un épaulement 114 formant une tête qui prend appui sur la structure porteuse et, plus particulièrement, sur la partie supérieure plane 104a de la pièce 104 de manière à retenir axialement la pièce de guidage 94.

Le pion 110 est fixé à l'intérieur du fourreau 112 de manière amovible et par exemple par encliquetage. Pour réaliser l'encliquetage le pion présente sur un de ses diamètres une gorge annulaire 116 (figure 8) qui est destinée à coopérer par engagement avec un bossage annulaire 118 aménagé sur la surface intérieure du fourreau axial 112 (figure 9).

La tête 114 du pion repose sur la partie supérieure 104a de la pièce 104 par une surface annulaire 120. Cette configuration permet de réaliser un meilleur contact par frottement que si le pion était disposé la tête tournée vers le bas en direction de l'élément de distribution, car alors, le contact par frottement aurait été réalisé sur l'encliquetage.

Il convient de remarquer que l'assemblage de la pièce de guidage 94 et du pion 110 est particulièrement simple à réaliser puisqu'il suffit d'engager la pièce de guidage dans le logement 106 et d'introduire en force le pion 110 dans le fourreau axial 112 jusqu'à encliqueter les deux éléments. La pièce de guidage de l'art antérieur (Fig.1) est réalisée en plusieurs parties et il est prévu de monter sur le cylindre 11 une vis sans fin (non représentée sur la figure 1) qui est destinée à s'engrener avec une ou plusieurs roues dentées d'un train d'engrenages ce qui complique considérablement les moyens de guidage de l'art antérieur et leur assemblage par rapport aux moyens de guidage selon l'invention. Ce train d'engrenages est relié au totalisateur du compteur.

Selon l'invention, le compteur de gaz comprend de manière connue un totalisateur à affichage destiné à afficher le volume de gaz mesuré par le compteur.

Pour ne pas surcharger les figures, ce totalisateur n'est pas représenté.

La pièce de guidage 94 comporte la roue dentée 102 qui sert à la transmission du mouvement de rotation de l'élément de distribution 64 au totalisateur par l'intermédiaire d'un train d'engrenages. Grâce à l'évidement 86 prévu dans la partie centrale de la structure porteuse 80, la roue dentée 102 s'engrène avec l'autre roue dentée 84 montée sur le pivot 82. Cette dernière coopère elle-même avec une troisième roue dentée 122 disposée perpendiculairement aux deux premières roues dentées et qui est montée sur une protubérance 124 (Fig.8) aménagée sur la partie extérieur de la branche 80b de la structure porteuse 80.

La roue dentée 122 coopère à son tour (de manière non représentée sur les figures) avec le totalisateur à affichage.

La présence des évidements 86, 90 et des pivots 82, 88 sur la partie centrale de la structure porteuse permet avantageusement un montage simple des roues dentées du train d'engrenages et leur disposition symétrique représentée sur les figures 7 à 9 permet le montage de la roue dentée 84 alternativement sur le pivot 82 ou sur le pivot 88 selon la configuration retenue.

Une autre protubérance 126 aménagée sur la partie extérieure de la branche 80a de la structure porteuse 80 est également prévue de manière symétrique à la protubérance 124 afin de pouvoir recevoir la roue 122 lorsque la roue 84 est montée sur le pivot 88.

## Revendications

1. Compteur de gaz comprenant plusieurs chambres de mesure (26) à membranes déformables (28), un élément de distribution (64) monté rotatif autour d'un axe dit de rotation sur une surface de distribution (42f) dans laquelle sont ménagés plusieurs orifices (44, 46, 48, 50)qui sont reliés chacun à une chambre de mesure, ledit élément de distribution permettant au gaz alternativement d'entrer et de sortir des chambres de mesure au cours du mouvement de rotation, des moyens de guidage en rotation dudit élément de distribution comprenant, d'une part, une pièce de guidage (94) dont au moins une partie a une forme générale allongée suivant ledit axe de rotation et qui comprend deux portions cylindriques (96,98b) éloignées l'une de l'autre et, d'autre part, deux paliers (104a,b) dans lesquels lesdites portions cylindriques sont montées libres en rotation, **caractérisé en ce que** la pièce de guidage (94) est réalisée dans un matériau thermoplastique et **en ce que** les portions cylindriques (96,98b) ont des diamètres différents.

2. Compteur de gaz selon la revendication 1, dans lequel la portion cylindrique (96) de plus grand diamètre est la plus proche de l'élément de distribution.

3. Compteur de gaz selon la revendication 1 ou 2, dans lequel la pièce de guidage comprend une portion tronconique reliant entre elles les deux portions cylindriques de diamètres différents.

4. Compteur de gaz selon l'une des revendications 1 à 3, dans lequel la pièce de guidage (94) a la forme d'une manivelle dont une extrémité est constituée des portions cylindriques (96, 98a, 98b) engagées dans les paliers et dont l'autre extrémité est constituée d'un doigt (78) parallèle à l'axe de rotation, décalé par rapport à celui-ci, et qui coopère avec une cavité (79) pratiquée dans l'élément de distribution (64).

5. Compteur de gaz selon l'une des revendications 1 à 4, dans lequel le compteur de gaz comprend une structure porteuse (80) en forme de U dont l'intérieur est tourné en direction de l'élément de distribution (64) de façon à encadrer ce dernier et supportant la pièce de guidage, la partie allongée de ladite pièce de guidage étant engagée dans un logement (106) prévu dans la structure par une extrémité dudit logement qui est disposée du côté où se trouve l'élément de distribution, les paliers (104a,b) étant aménagés à l'intérieur dudit logement.

6. Compteur de gaz selon la revendication 5, comprenant un organe de retenue axiale (110) de la pièce de guidage.

7. Compteur de gaz selon la revendication 6, dans lequel l'organe de retenue axiale de la pièce de guidage est un pion (110) engagé dans un fourreau axial (112) aménagé à l'intérieur de la pièce de guidage (94) du côté de l'extrémité opposée du logement, ledit pion étant fixé à ladite pièce de guidage de manière amovible, et étant pourvu à l'extérieur dudit fourreau d'un épaulement (114) formant une tête qui prend appui sur la structure porteuse de manière à retenir axialement ladite pièce de guidage.

8. Compteur de gaz selon la revendication 7, dans lequel le pion (110) est fixé à l'intérieur du fourreau par encliquetage.

9. Compteur de gaz selon la revendication 8, dans lequel le pion (110) présente sur un de ses diamètres une gorge annulaire (116) destinée à coopérer avec un bossage annulaire (118) aménagé sur la surface intérieure du fourreau (112).

10. Compteur de gaz selon la revendication7, dans lequel la tête (114) du pion (110) prend appui sur la structure porteuse (80) au moyen d'une surface annulaire (120) perpendiculaire à l'axe de rotation.

11. Compteur de gaz selon l'une des revendications 1 à 10, comprenant un totalisateur à affichage et la pièce de guidage comportant une roue dentée (102) qui transmet le mouvement de rotation de l'élément de distribution (64) audit totalisateur par l'intermédiaire d'un train d'engrenages.

12. Compteur de gaz selon la revendication 11, dans lequel la roue dentée (102) est disposée à une extrémité de la partie allongée de la pièce de guidage (94) qui est la plus proche de l'élément de distribution et est perpendiculaire à cette partie.

13. Compteur de gaz selon la revendication 11, dans lequel la pièce de guidage comprend un plateau (100) qui porte sur une face la roue dentée (102).

14. Compteur de gaz selon les revendications 4 et 13, dans lequel le plateau porte sur sa face opposée le doigt (78) qui coopère avec l'élément de distribution (64).

15. Compteur de gaz selon les revendications 5 et 11, dans lequel la structure (80) en forme de U est constituée d'une partie centrale parallèle à la surface de distribution (42f) et de deux parties latérales (80a, 80b) formant les branches du U, ladite partie centrale comportant une embase (80c) de forme générale circulaire disposée dans un plan (P1) parallèle à la surface de distribution et pourvue à sa périphérie d'une collerette (80d) disposée perpendiculairement à ladite embase de manière à définir une cavité (81) située en vis-à-vis de l'élément de distribution et destinée à recevoir la roue dentée (102).

16. Compteur de gaz selon la revendication 15, dans lequel la partie centrale de la structure (80) en forme de U comporte de part et d'autre de l'embase (80c) deux portions (80e, 80f) situées dans un plan (P2) parallèle à la surface de distribution (42f) et décalé par rapport au plan (P1) d'une distance supérieure à l'épaisseur de la roue dentée, l'une desdites portions (80f) portant un pivot (82) pouvant recevoir une autre roue dentée (84) du train d'engrenages et un évidement (86) étant pratiqué dans ladite embase et dans ladite collerette afin que les roues dentées puissent coopérer entre elles.

17. Compteur de gaz selon la revendication 16, dans lequel l'autre portion (80e) de la partie centrale porte un pivot (88) pouvant recevoir une autre roue dentée du train d'engrenages et un autre évidement (90) étant pratiqué dans l'embase (80c) et la collerette (80d) du côté opposé au premier évidement (86) afin que les roues dentées puissent coopérer entre elles.

## Patentansprüche

1. Gaszähler mit mehreren Meßkammern (26) mit elastischen Membranen (28), einem Verteilungselement (64), das drehbar um eine sogenannte Rotationsachse auf einer Verteilungsfläche (42f) gelagert ist, in der mehrere Öffnungen (44, 46, 48, 50) angebracht sind, die jeweils mit einer Meßkammer verbunden sind, wobei das Verteilungselement ermöglicht, daß das Gas im Laufe der Drehbewegung wahlweise in die Meßkammern eintritt oder aus ihnen austritt, und Drehführungsmitteln des Verteilungselements, die einerseits ein Führungsglied (94) umfassen, von dem wenigstens ein Teil eine allgemein verlängerte Form entlang der Rotationsachse hat und das zwei, voneinander beabstandete zylindrische Abschnitte (96, 98b) aufweist, und die andererseits zwei Lager (104a,b) umfassen, in denen die zylindrischen Abschnitte frei drehbar gelagert sind, **dadurch gekennzeichnet, daß** das Führungsglied (94) aus einem thermoplastischen Material hergestellt ist und daß die zylindrischen Abschnitte (96, 98b) unterschiedliche Durchmesser aufweisen.

2. Gaszähler nach Anspruch 1, bei dem der zylindrische Abschnitt (96) mit größerem Durchmesser dem Verteilungselement am nächsten liegt.

3. Gaszähler nach Anspruch 1 oder 2, bei dem das Führungsglied einen kegelstumpfartigen Abschnitt aufweist, der die beiden zylindrischen Abschnitte unterschiedlicher Durchmesser miteinander verbindet.

4. Gaszähler nach einem der Ansprüche 1 bis 3, bei dem das Führungsglied (94) die Form einer Kurbel hat, deren eines Ende aus den zylindrischen Abschnitten (96, 98a, 98b) gebildet ist, die mit den Lagern in Eingriff sind, und deren anderes Ende aus einem Finger (78) gebildet ist, der zu der Rotationsachse parallel ist, bezüglich dieser versetzt ist und der mit einem Hohlraum (79) zusammenwirkt, der in dem Verteilungselement (64) angebracht ist.

5. Gaszähler nach einem der Ansprüche 1 bis 4, bei dem der Gaszähler eine U-förmige Tragstruktur (80) aufweist, deren Inneres so in Richtung des Verteilungselements (64) weist, daß sie dieses umrahmt und das Führungsglied trägt, wobei der verlängerte Teil des Führungsgliedes mit einer Aufnahme (106), die in der Struktur vorgesehen ist, über ein Ende der Aufnahme in Eingriff ist, das an der Seite angeordnet ist, an der sich das Verteilungselement befindet, wobei sich die Lager (104a,b) im Inneren der Aufnahme befinden.

6. Gaszähler nach Anspruch 5, der ein axiales Rückhaltemittel (110) des Führungsgliedes aufweist.

7. Gaszähler nach Anspruch 6, bei dem das axiale Rückhaltemittel des Führungsgliedes ein Metallstück (110) ist, das in eine Hülse (112) eingreift, die im Inneren des Führungsgliedes (94), auf der Seite des der Aufnahme gegenüberliegenden Endes angeordnet ist, wobei das Metallstück lösbar an dem Führungsglied befestigt ist und außerhalb der Hülse mit einem Bund (114) versehen ist, der einen Kopf bildet, der auf der Tragstruktur in Anlage ist, so daß das Führungsglied axial zurückgehalten wird.

8. Gaszähler nach Anspruch 7, bei dem das Metallstück (110) durch eine Rastverbindung im Inneren der Hülse befestigt ist.

9. Gaszähler nach Anspruch 8, bei dem das Metallstück (110) auf einem seiner Durchmesser eine ringförmige Rille (116) aufweist, die dazu dient, mit einem ringförmigen Wulst (118) zusammenzuwirken, der auf der inneren Oberfläche der Hülse (112) angebracht ist.

10. Gaszähler nach Anspruch 7, bei dem der Kopf (114) des Metallstücks (110) auf der Tragstruktur (80) mit Hilfe einer ringförmigen Fläche (120) in Anlage ist, die senkrecht zur Rotationsachse ist.

11. Gaszähler nach einem der Ansprüche 1 bis 10, der ein Zählwerk mit Anzeige aufweist, und wobei das Führungsglied ein Zahnrad (102) aufweist, das die Drehbewegung des Verteilungselements (64) über ein Übersetzungsgetriebe an das Zählwerk überträgt.

12. Gaszähler nach Anspruch 11, bei dem das Zahnrad (102) an einem Ende des verlängerten Teils des Führungsgliedes (94) angeordnet ist, das dem Führungsglied am nächsten liegt und zu diesem Teil senkrecht ist.

13. Gaszähler nach Anspruch 11, bei dem das Führungsglied (100) eine Scheibe (100) aufweist, die auf einer Seite das Zahnrad (102) trägt.

14. Gaszähler nach einem der Ansprüche 4 bis 13, bei dem die Scheibe auf ihrer gegenüberliegenden Seite den Finger (78) trägt, der mit dem Verteilungselement (64) zusammenwirkt.

15. Gaszähler nach einem der Ansprüche 5 bis 11, bei dem die U-förmige Struktur (80) aus einem zu der Verteilungsfläche (42f) parallelen mittleren Teil sowie aus zwei seitlichen Teilen (80a, 80b) gebildet ist, die die Schenkel des U bilden, wobei der mittlere Teil eine Befestigungsfläche (80c) allgemein kreisrunder Form aufweist, die in einer Ebene (P1) liegt, welche parallel zu der Verteilungsfläche ist, und die auf ihrem Umfang mit einem Kragen (80d) versehen ist, der senkrecht zu der Befestigungsfläche angeordnet ist, um einen Hohlraum (81) zu bilden, der sich gegenüber dem Verteilungselement befindet und dazu dient, das Zahnrad (102) aufzunehmen.

16. Gaszähler nach Anspruch 15, bei dem der mittlere Teil der U-förmigen Struktur beiderseits der Befestigungsfläche (80c) zwei Abschnitte (80e,80f) aufweist, die in einer Ebene (P2) liegen, die parellel zu der Verteilungsfläche (42f) liegt und zu der Ebene (P1) um eine Distanz versetzt ist, die größer als die Dicke des Zahnrades ist, wobei der eine der Abschnitte (80f) einen Drehzapfen (82) trägt, der ein weiteres Zahnrad (84) des Übersetzungsgetriebes aufnehmen kann, und wobei eine Aussparung (86) in der Befestigungsfläche und in dem Kragen angebracht ist, damit die Zahnräder miteinander zusammenwirken können.

17. Gaszähler nach Anspruch 16, bei dem der weitere Abschnitt (80e) des mittleren Teils einen Drehzapfen (88) trägt, der ein weiteres Zahnrad des Übersetzungsgetriebes aufnehmen kann, und wobei eine weitere Aussparung (90) in der Befestigungsfläche (80c) und dem Kragen (80d) auf der der ersten Aussparung (86) gegenüberliegenden Seite, damit die Zahnräder miteinander zusammenwirken können.

## Claims

1. A gas meter comprising a plurality of deformable diaphragm (28) measurement chambers (26), a distributor element (64) mounted to rotate about a "rotation" axis on a distribution surface (42f) in which there are provided a plurality of orifices (44, 46, 48, 50) each of which is connected to a respective measurement chamber, said distributor element enabling gas to enter and to leave the measurement chambers in alternation during its rotary movement, and means for guiding said distributor element in rotation comprising firstly a guide piece (94) having at least a portion of generally elongate shape along the axis of rotation with two cylindrical regions (96, 98b) spaced apart from each other, and secondly two bearings (104a,b) in which said cylindrical regions are mounted to rotate freely, the meter being **characterized in that** the guide piece (94) is made of a thermoplastic material and **in that** the cylindrical regions (96, 98b) are of different diameters.

2. A gas meter according to claim 1, in which the larger diameter cylindrical region (96) is closer to the distributor element.

3. A gas meter according to claim 1 or 2, in which the guide piece has a frustoconical region interconnecting the two different-diameter cylindrical regions.

4. A gas meter according to any one of claims 1 to 3, in which the guide piece (94) is in the form of a crank having one end constituted by the cylindrical regions (96, 98a, 98b) engaged in the bearings, and whose other end is constituted by finger (78) parallel to the axis of rotation and offset therefrom, which finger co-operates with a cavity (79) formed in the distributor element (64).

5. A gas meter according to any one of claims 1 to 4, in which the gas meter includes a U-shaped carrier structure (80) whose inside faces towards the distributor element (64) so as to surround it, and supporting the guide piece, the elongate portion of said guide piece being engaged in a housing (106) provided in the structure via one end of said housing which is disposed at the same end as the distributor element, the bearings (104a,b) being arranged inside said housing.

6. A gas meter according to claim 5, comprising a member (110) for axially retaining the guide piece.

7. A gas meter according to claim 6, in which the axial retaining member for the guide piece is a peg (110) engaged in an axial sheath (112) provided inside the guide piece (94) from its end opposite from the housing, said peg being fixed to said guide piece in removable manner and being provided on the outside of said sheath with a shoulder (114) forming a head which bears against the carrier structure so as to retain said guide piece axially.

8. A gas meter according to claim 7, in which the peg (110) is fixed to the inside of the sheath by snap fastening.

9. A gas meter according to claim 8, in which the peg (110) has an annular groove (116) on one of its diameters to co-operate with an annular bead (118) formed on the inside surface of the sheath (112).

10. A gas meter according to claim 7, in which the head (114) of the peg (110) bears against the carrier structure (80) by means of an annular surface (120) extending perpendicularly to the axis of rotation.

11. A gas meter according to any one of claims 1 to 10, comprising a display counter, and the guide piece including a gearwheel (102) for transmitting the rotary movement of the distributor element (64) to said counter via a gear train.

12. A gas meter according to claim 11, in which the gearwheel (102) is disposed at the end of the elongate portion of the guide piece (94) which is closest to the distributor element, and is perpendicular to said portion.

13. A gas meter according to claim 11, in which the guide piece comprises a turntable (100) which carries the gearwheel (102) on one of its faces.

14. A gas meter according to claims 4 and 13, in which the turntable carries on its opposite face the finger (78) which co-operates with the distributor element (64).

15. A gas meter according to claims 5 and 11, in which the U-shaped structure (80) is constituted by a central portion parallel to the distribution surface (42f) and two side portions (80a, 80b) forming the branches of the U-shape, said central portion including a base (80c) of generally circular shape disposed in a plane P1 extending parallel to the distribution surface and provided at its periphery with a collar (80d) disposed perpendicularly to said base in such a manner as to define a cavity (81) situated facing the distributor element and designed to receive its gearwheel (102).

16. A gas meter according to claim 15, in which the central portion of the U-shaped structure (80) includes, on either side of the base (80c), two regions (80e, 80f) situated in a plane P2 parallel to the distribution surface (42f) and offset from the plane P1 by a distance that is greater than the thickness of the gearwheel, one of said regions (80f) carrying a pivot (82) capable of receiving another gearwheel (84) of the gear train, and a recess (86) being provided in said base and in said collar so that the gearwheels can co-operate with each other.

17. A gas meter according to claim 16, in which the other region (80e) of the central portion carries a pivot (88) capable of receiving another gearwheel of the gear train, and another recess (90) being formed in the base (80c) and the collar (80d) on the side opposite to the first recess (86) so that the gearwheels can co-operate with each other.
